# EUROPEAN PATENT APPLICATION

(11) **EP 2 308 783 A1**
(43) Date of publication of application: **13.04.2011**
(21) Application number: 10186724.0
(22) Date of filing: 06.10.2010
(51) Int. Cl.: B65G 49/06, H02P 3/14

(54) **Machine for handling glass sheets**

(30) Priority: 06.10.2009 IT TO20090761
(71) Applicant: Bottero S.p.A., 12100 Cuneo (IT)
(72) Inventor: Garino, Enrico, 12011 Borgo san Dalmazzo (IT); Guarguagli, Marco, 12100 Cuneo (IT)
(74) Representative: Jorio, Paolo

(57) **Abstract**

In a glass sheet processing/handling machine (5)(11)(15), at least one electric motor (9)(13)(19) for powering a respective movable member (6)(12)(16) is powered by a drive (20) having a direct power device (23) connected to an industrial electric power mains (21); and a rechargeable power device (28) alternative to the direct power device (23) and having a storage block (29) for storing energy produced by the electric motor (9)(13)(19) when decelerating the relative movable member (6)(12)(16).

## Description

The present invention relates to a glass sheet processing/handling machine.

In glass sheet processing, machines are used for performing a wide range of operations on the sheets, such as scoring, cutting, grinding, etc., and are associated with handling and transfer machines for safely moving the sheets and derived products.

Sheet processing and handling/transfer machines each comprise one or more movable, normally translatory or rotary, members or frames, each powered by a dedicated electric motor.

Each electric motor is controlled by a respective drive connected to the electric power mains to propel or accelerate the movable member at a given rate, and subsequently brake or decelerate the movable member. When braking or decelerating, the kinetic energy of the movable member produces electric energy, which enters the drive and is dissipated by it by means of a dedicated, e.g. dissipating electric resistor, discharge circuit.

It is an object of the present invention to provide a glass sheet processing/handling machine designed to prevent electric energy loss by dissipation, and which, in particular, enables use of all or part of the electric energy produced kinetically when braking one or more of the movable members, with no discontinuity in control of the movable member.

According to the present invention, there is provided a glass sheet processing/handling machine, the machine comprising at least one movable member movable according to a given law of motion, depending on the process to be performed and/or the type of sheet for handling; an electric motor for powering said movable member; and a drive for driving said electric motor and connectable to an industrial electric power mains; said drive comprising a first direct power device comprising an alternating-direct voltage converter block connectable to said industrial electric power mains, a direct-current power line connected to said converter block, a power-up circuit, and a direct-alternating voltage converter block connected directly to said direct-current power line on one side, and to said electric motor on the other; the machine being characterized in that said drive also comprises a rechargeable power device for powering said electric motor, and comprising a storage block for storing energy produced by said electric motor when braking, and interface means connected electrically to said direct-current power line and to said storage block.

The rechargeable power device of the machine as defined above preferably also comprises precharging means for precharging said storage block and connected to said industrial electric power mains.

A non-limiting embodiment of the invention will be described by way of example with reference to the accompanying drawings, in which:
Figure 1 shows a schematic plan view, substantially in blocks, of a glass sheet processing/handling system;
Figures 2 to 4 show schematic, larger-scale views, substantially in blocks, of a detail of Figure 1.

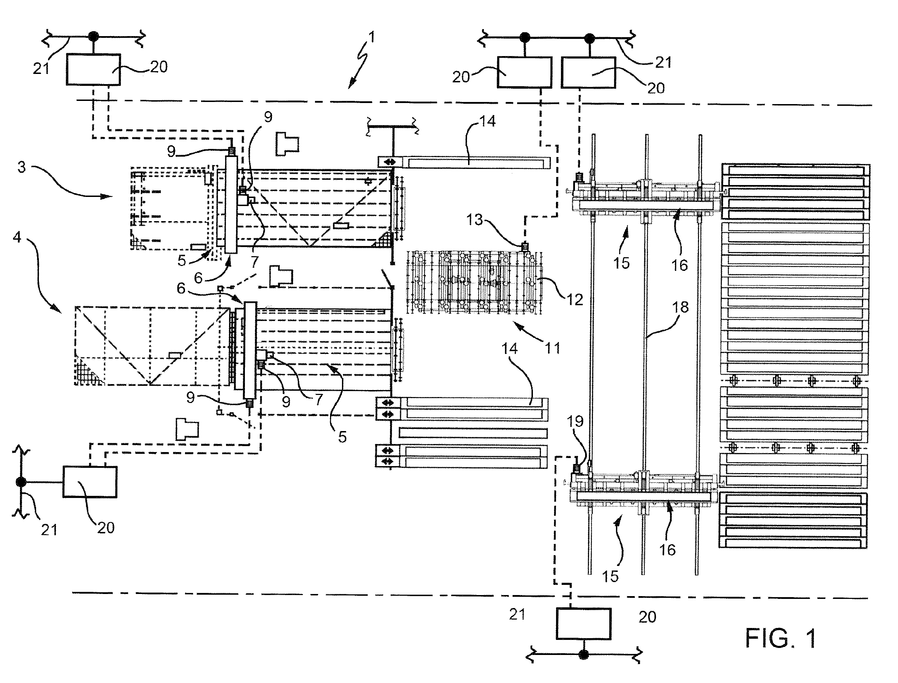

Number 1 in Figure 1 indicates as a whole a glass sheet processing/handling system.

In the example shown, system 1 comprises two sheet processing lines 3, 4, each of which comprises a cutting assembly 5, in turn comprising a frame, at least one bridge 6 movable with respect to the frame, and a sheet scoring or grinding or drilling head 7 movable along bridge 6. Bridge 6 and head 7 are powered by respective electric motors 9 shown schematically.

Each line 3, 4 comprises its own powered systems for moving sheets along the line; and a shared loading machine 11, a pickup member 12 of which is moved back and forth, crosswise to line 3, 4, by a dedicated electric motor 13.

In a variation not shown, each of lines 3, 4 has a loading machine 11, which removes sheets from sheet racks 14 loaded with sheets by a sheet transfer machine 15.

Machine 15 comprises a powered frame 16, which is moved by a respective motor 19 in a direction 18 to enable machine 15 to withdraw sheets from a store and transfer them to loading machine 11.

Motors 9, 13, 19 are powered and controlled by respective independent drives 20 connected to an industrial electric power mains 21.

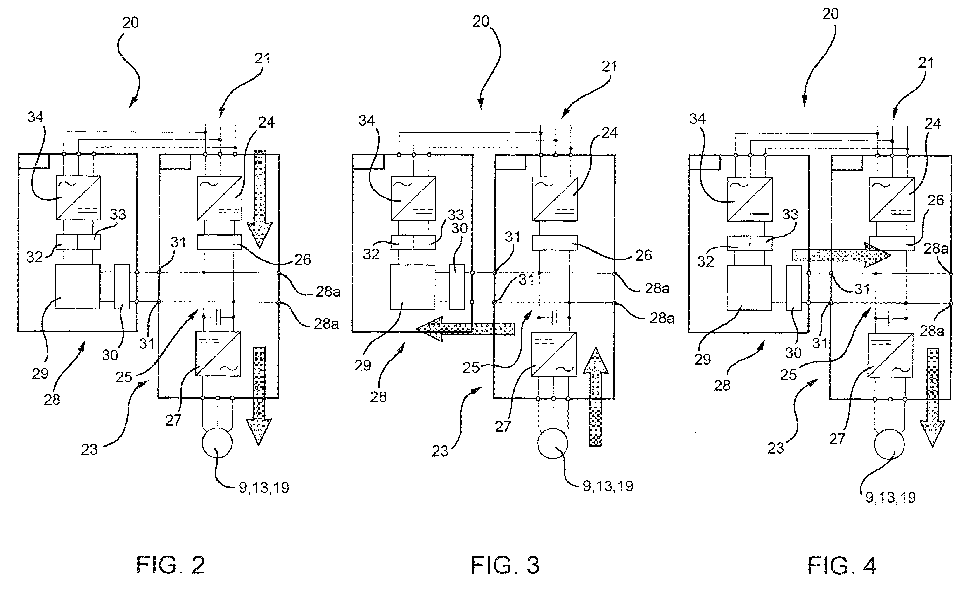

With reference to Figures 2 to 4, each drive 20 controls the respective motor according to a given law of motion, depending on the process to be performed and/or the movement of the sheets, and comprises a direct power device 23 for powering respective motor 9, 13, 19, and in turn comprising an alternating-direct voltage converter block 24 connected to electric power mains 21, a direct-current power line 25, and a power-up circuit 26 connected to converter block 24 on one side, and to direct-current power line 25 on the other.

Connected to direct-current power line 25, device 23 also comprises a direct-alternating voltage converter block 27 connected directly to relative electric motor 9, 13, 19, and two auxiliary terminals 28a.

As shown in Figures 2 to 4, each drive 20 also comprises a rechargeable device 28 for powering relative electric motor 9, 13, 19 alternatively to the block 24-circuit 26 assembly.

Rechargeable device 28 comprises a direct-voltage energy storage block 29; and an interface circuit 30 connected electrically to storage block 29 and to a pair of terminals 31 of direct-current power line 25, separate from and parallel to the two auxiliary terminals 28a.

Each rechargeable device 28 also comprises a precharge circuit 32 connected to industrial electric power mains 21 to precharge storage block 29 prior to use of the relative motor; and a discharge circuit 33 for discharging storage block 29 when or after the relative machine is turned off.

Each rechargeable device 28 also comprises a further alternating-direct voltage converter block 34 connected to storage block 29 by precharge and discharge circuits 32, 33, and to industrial electric power mains 21, in parallel with converter block 24.

With reference to Figures 2 to 4, each drive 20 operates as follows.

Starting with relative storage block 29 discharged, storage block 29 is fully charged by relative precharge circuit 32 when the relative machine is turned on, so a given amount of electric energy is stored and made immediately available to the relative motor. When charging storage block 29, motor 9, 13, 19 is powered by relative power device 23 from industrial electric power mains 21, as shown in Figure 2.

As soon as the motor is braked, i.e. has to counteract the kinetic energy of the moving member or frame, the energy produced by the motor passes to direct-current power line 25, and from this to storage block 29, as shown in Figure 3.

At the first energy demand by the motor, the energy stored in storage block 29 is drawn and fed to the motor, as shown in Figure 4. When the energy in storage block 29 is insufficient, the motor is again powered by direct power device 23 from the industrial power mains.

Unlike known glass sheet processing/handling solutions, drive 20 described therefore enables machines to operate with no energy dissipation and therefore in energy-saving mode, by storing the energy produced by the motors when braking or decelerating the movable members, and making it available for the next acceleration of the motor.

Tests, in fact, show that, despite the relatively limited travel and brief transient states of glass sheet processing/handling machines, energy saving, as compared with conventional dissipation machines, may be as high as 25%.

By employing capacitor-type storage blocks, rechargeable devices 28 are extremely compact, and therefore housable in existing electric control cabinets of the machine.

Moreover, power device 23 having two separate parallel pairs of terminals for connection to direct-current power line 25, the machines described are predisposed to operate in energy-recovery mode, but also in dissipation mode when dissipation blocks or circuits are connected to the auxiliary terminals.

Because connection of rechargeable device 28 to device 23 needs only two terminals for connection to common direct-current power line 25, any conventional energy-dissipation machine can therefore be converted to an energy-recovery machine quickly and easily, with no structural alterations or changes to the existing motor control mode.

As stated, precharge circuit 32 solves any electric drive delay problems inevitably posed when operating the system solely from the electric power mains, with the storage block discharged.

Similarly, discharge circuit 33 discharges storage block 29 when or after the machine is turned off, thus eliminating any problems posed by residual voltage when the motor is turned off.

As will be clear from the above description, drive 20 can be used to power any glass sheet processing/handling machine motor, even those of machines other than those referred to by way of example and commonly used in the glass industry.

## Claims

1. A glass sheet processing/handling machine, the machine comprising at least one movable member movable according to a given law of motion, depending on the process to be performed and/or the type of sheet for handling; an electric motor for powering said movable member; and a drive for driving said electric motor and connectable to an industrial electric power mains; said drive comprising a first direct power device comprising an alternating-direct voltage converter block connectable to said industrial electric power mains, a direct-current power line connected to said converter block, a power-up circuit, and a direct-alternating voltage converter block connected directly to said direct-current power line on one side, and to said electric motor on the other; the machine being **characterized in that** said drive also comprises a rechargeable power device for powering said electric motor, and comprising a storage block for storing energy produced by said electric motor when braking, and interface means connected electrically to said direct-current power line and to said storage block.

2. A machine as claimed in Claim 1, **characterized in that** said rechargeable power device also comprises precharging means for precharging said storage block and connected to said industrial electric power mains.

3. A machine as claimed in Claim 1 or 2, **characterized in that** said rechargeable power device also comprises discharging means for discharging said storage block.

4. A machine as claimed in Claim 2 or 3, **characterized in that** said rechargeable power device also comprises a further alternating-direct voltage converter block connected to said storage block by said precharging means, and to said industrial electric power mains, in parallel with said converter block.

5. A machine as claimed in any one of the foregoing Claims, **characterized in that** said rechargeable power device is connected to said direct-current power line by two first connecting terminals; and **in that** two second connecting terminals, separate from, and connected to the direct-current power line in parallel with, said first connecting terminals, are provided to connect alternative auxiliary circuits to said rechargeable power device.

6. A machine as claimed in any one of the foregoing Claims, **characterized in that** said storage block is a direct-voltage-powered capacitor block.
